# EUROPÄISCHE PATENTSCHRIFT

(11) **EP 0 783 055 B1**
(45) Veröffentlichungstag und Bekanntmachung des Hinweises auf die Patenterteilung: **06.10.1999**
(21) Anmeldenummer: 96119498.2
(22) Anmeldetag: 05.12.1996
(51) Int. Cl.: E01H 1/05, F16C 27/04, F16D 3/56, F16D 3/76

(54) **Kupplung und Kehrwalze mit dieser Kupplung**
Coupling and rotary sweeper with this coupling
Accouplement et balai rotatif cylindrique avec cet accouplement

(30) Priorität: 05.01.1996 DE 29600076 U
(43) Veröffentlichungstag der Anmeldung: 09.07.1997
(73) Patentinhaber: Formex Plastik GmbH, 47623 Kevelaer (DE)
(72) Erfinder: Wyenhoven Heinrich, D-47652 Weeze (DE); Peters, Heinrich-Josef, D-47623 Kevelaer (DE)
(74) Vertreter: Funken, Josef, Dipl.-Ing.

(56) Entgegenhaltungen:
- WO-A-92/02741
- DE-A- 1 459 661
- DE-A- 1 534 187
- DE-A- 3 501 098
- DE-A- 4 106 945
- FR-A- 1 198 842
- FR-A- 2 328 882
- FR-A- 2 409 417
- US-A- 1 664 052
- US-A- 3 283 536
- US-A- 4 346 494

## Beschreibung

Die Erfindung betrifft eine Kupplung, bestehend aus einem Primärteil und einem Sekundärteil sowie aus einer drehfesten Verbindung zwischen dem Primärteil und dem Sekundärteil, wobei als Primärteil eine Achsaufnahme und als Sekundärteil ein zur Achsaufnahme koaxialer und mit dieser drehfest verbundener Ring vorgesehen ist und wobei als Verbindung zwischen der Achsaufnahme und dem Ring speicherförmig angeordnete Federn vorgesehen sind, die senkrecht zu der von dem Ring aufgespannten Ebene elastisch sind und in Drehrichtung in der von dem Ring gebildeten Ebene drehsteif sind, und wobei das Primärteil gegenüber dem Sekundärteil eine taumelnde Bewegung ausführt.

Herkömmlicherweise besteht eine solche Kupplung aus einer zu einer Drehachse koaxialen Achsaufnahme und einer um die Achsaufnahme koaxial angeordneten Scheibe, wobei zwischen der Achsaufnahme und der Scheibe feste Verbindungselemente in Form einer Scheibe oder in Form mehrerer Speichen vorgesehen sind. Die Achsaufnahme wird durch einen Antrieb angetrieben, während die Scheibe in einem Hohlzylinder eingesetzt ist und dadurch der Hohlzylinder durch den Antrieb über die Kupplung anzutreiben ist. Hierbei fallen die Achse des Antriebs und die Achse des anzutreibenden Hohlzylinders genau zusammen. Der Hohlzylinder muß daher so gelagert sein, daß diese Bedingung erfüllt wird, damit es nicht zu Beschädigungen der Kupplung oder des Antriebes oder des Hohlzylinders kommt.

Aus der US 3 283 596 A, der den Oberbegriff des Anspruchs 1 offenbart, ist eine elastische Kupplung bekannt, wobei eine erste Lagerbüchse mit einem Schaft und eine zweite Lagerbüchse mit einem den Schaft mit Abstand zylindrisch umgebenden Gehäuse vorgesehen ist. Zwischen der inneren Oberfläche des Gehäuses und der äußeren Oberfläche des Schaftes sind Federpakete so angeordnet, daß der Schaft und das Gehäuse in Drehrichtung der Kupplung drehfest miteinander verbunden sind, während das Gehäuse gegenüber dem Schaft eine Taumelbewegung ausführen kann.

Die US 1 664 052 A zeigt eine elastische Kupplung, bei der das Sekundärteil gegenüber dem Primärteil eine Taumelbewegung ausführen kann. Hierzu sind die beiden gegenüberliegenden Flansche des Primärteiles und des Sekundärteiles in größerem Umfang weiter außen elastisch miteinander verbunden.

In der FR 1 198 842 A ist eine elastische Kupplung dargestellt, bei der die beiden gegenüberliegenden Enden des Primärteiles und des Sekundärteiles mittels einer Masse von großer Elastizität miteinander verbunden sind, so daß aufgrund dieser elastischen Verbindung von Primärteil und Sekundärteil das Sekundärteil gegenüber dem Primärteil eine taumelnde Bewegung ausführen kann.

In der WO 92 027 41 A ist ein Motor gezeigt, an dessen Antriebsseite über eine elastische Kupplung ein Bauteil vorgesehen ist, mit dem ein anzutreibendes Bauteil verbunden werden kann, so daß das anzutreibende Bauteil gegenüber dem Antriebsmotor eine taumelnde Bewegung ausführen kann.

Aus dem deutschen Gebrauchsmuster 91 01 314 ist eine Membrankupplung zur korrosionssteifen, biegeelastischen Verbindung von drehmomentführenden Antriebselementen mit mindestens einer Ausgleichsebene und mindestens einer Membran zwischen den Anschlußteilen beschrieben, wobei die Dicke des elastischen Membranbereichs nach außen hin abnimmt. Bei dieser Membrankupplung ist vorgesehen, daß im elastischen Membranbereich Durchbrüche und/oder Sicken angeordnet sind. Dabei können die Sicken konzentrisch angeordnet sein. Die elastischen Elemente der Kupplung können sowohl aus metallischen Werkstoffen und/oder Kunststoffen (Verbundwerkstoffen) bestehen. Die Durchbrüche sind auf mindestens zwei Teilkreisen versetzt angeordnet und/oder in unterschiedlicher Größe angeordnet.

Kehrwalzen sind bekannt in Vollzylinderkonstruktion, bzw. Rohrkonstruktion, bestehend aus einem einteiligen Rohr und andererseits in Halbzylinderkonstruktion, als Halbschalenkonstruktion in Form eines aus zwei gleichen Zylinderhälften bestehenden Hohlzylinders bekannt, die mit Borsten besetzt sind und in einer Kehrmaschine Verwendung finden, derart, daß eine solche Kehrwalze zwischen zwei Schwingen der Kehrmaschine beidseitig drehbeweglich gelagert und einseitig angetrieben sind.

Kehrwalzen in Vollzylinderkonstruktion sind in der Herstellung vergleichsweise einfach, bieten aber Schwierigkeiten beim Ein- und Ausbau zwischen die zwei Schwingarme einer Kehrmaschine. Die Kehrwalzen in Vollzylinderkonstruktion sind allerdings in vergleichsweise großer Länge, insbesondere weit über 700 mm Länge herstellbar.

Kehrwalzen in Halbzylinderkonstruktion sind in der Herstellung vergleichsweise schwierig, bieten aber den Vorteil, daß sie ohne weiteres zwischen die Schwingarme einer Kehrmaschine ein- und ausgebaut werden können, also besonders montagefreundlich sind.

Es ist aber erwünscht, insbesondere bei Kehrwalzen eine Abweichung der Ausrichtung der Achse der Kehrwalze gegenüber der Achse des Antriebs bzw. des Antriebsmotors zuzulassen.

Der Erfindung liegt die Aufgabe zugrunde, eine Kupplung der einleitend genannten Art dahingehend weiterzubilden, daß die Kupplung einen vergleichsweise großen Taumelwinkel zuläßt, ohne daß es dabei zu besonderen Materialbeanspruchungen, wie etwa Zwängungen oder Reibungen benachbarter Bauteile kommt.

Diese Aufgabe wird erfindungsgemäß dadurch gelöst, daß die Achsaufnahme als Hülse ausgebildet ist, daß die Federn und die Achsaufnahme sowie der Ring als einteiliges Spritzgießteil aus einem Polyamid oder einem Polyacetalharz ausgeführt sind, daß die Federn als Mäanderfedern ausgebildet sind und daß auf dem Umfang des Ringes verteilt Mitnehmer angeordnet sind, die auf dem Ring als Nocken und Nuten ausgebildet sind.

Auf diese Weise gelangt man zu einer Kupplung der vorstehend genannten Art, die einen vergleichsweise großen Taumelwinkel zuläßt, ohne daß es dabei zu besonderen Materialbeanspruchungen, etwa Zwängungen oder dergleichen kommt. Die Kupplung unterliegt somit keinem besonderen Verschleiß und verfügt daher über eine besonders hohe Standzeit. Hinzu kommt, daß die Kupplung einteilig ausgeführt werden kann und daher vergleichsweise einfach in der Herstellung ist. Wegen der Ausbildung der Federn als Mäanderfedern sind auf vergleichsweise kleinem Raum große Federwege möglich, was wiederum zu einem entsprechend großen Taumelwinkel führt.

Außerdem kann bei dieser Kupplung der Ring um die Hülse bzw. um die Achse der Achsaufnahme Taumelbewegungen ausführen. Das bedeutet weiterhin, daß der mittels der Kupplung und des Ringes angetriebene Hohlzylinder bezüglich seiner axialen Ausrichtung bis zu wenigstens 5° von der axialen Ausrichtung des Antriebsmotors abweichen kann. Das führt des weiteren dazu, daß die Lagerung eines angetriebenen Hohlzylinders bzw. die Lagerung einer Kehrwalze erheblich vereinfacht werden kann. Hinzu kommt, daß mit einer derart gelagerten Kehrwalze auch im Boden befindliche Vertiefungen, Dellen und dergleichen ohne weiteres gekehrt werden können, ohne daß diese Flächen weniger sauber sind als andere Flächen.

Die Ausführung von Taumelbewegungen durch den Ring ist dadurch möglich, daß der Ring gegenüber der Achsaufnahme derart federnd gelagert ist, daß er sich federnd aus einer senkrecht zur Achse der Achsaufnahme verlaufenden Ebene symmetrisch zur Drehachse bewegen kann.

Zweckmäßig kann vorgesehen sein, daß die Achsaufnahme im Durchmesser abgesetzt ist und einen durchmessergrößeren sowie einen durchmesserkleineren Teil aufweist.

Außerdem können mehrere einander gleiche Federn vorgesehen sein.

Nach einem weiteren Merkmal der Erfindung können auf dem Ring zwei gegenüberliegend angeordnete Nuten und zwei ebenfalls gegenüberliegend angeordnete Nocken vorgesehen sein, wobei die Nuten und die Nocken einen Umfangsabstand von je 90° haben.

Die Erfindung betrifft des weiteren die Verwendung der vorstehend beschriebenen Kupplung für eine Kehrwalze, die als beidseitig offener Langkörper ausgebildet ist.

Der Erfindung liegt die weitere Aufgabe zugrunde, die Kupplung für eine Kehrwalze zu verwenden, die in zwei unabhängig voneinander sich bewegenden Schwingarmen einer Kehrmaschine gelagert ist.

Diese Aufgabe wird erfindungsgemäß dadurch gelöst, daß je eine der vorstehend beschriebenen und beanspruchten Kupplungen an beiden Enden einer Kehrwalze angeordnet ist, die beidseitig in Schwingarmen einer Kehrmaschine gelagert ist, und daß die Kehrwalze an der einen Seite über einen Antrieb und eine Kupplung angetrieben und an der anderen Seite über eine Kupplung und eine Welle frei drehbeweglich gelagert ist.

Auf diese Weise gelangt man zu einer Kehrwalze mit einer Kupplung, wobei die Kehrwalze in zwei beidseitig in Schwingarmen einer Kehrmaschine gelagert sein kann, ohne daß es zu Zwängungen und besonders hohem Verschleiß kommt.

Es empfiehlt sich, die Anordnung so auszubilden, daß die Kehrwalze einen mit Borsten versehenen Hohlzylinder und zwei an beiden Enden der Kehrwalze angeordnete Kupplungen der in den vorstehenden Ansprüchen beanspruchte Art besteht.

Zweckmäßig besteht die Kehrwalze aus zwei gleichen den Hohlzylinder bildenden Halbzylindern, die fest, aber lösbar miteinander verbunden sind, wobei die Ringe der Kupplungen in in den Hohlzylindern umlaufenden Nuten eingesetzt sind.

In weiterer Ausgestaltung der Erfindung kann vorgesehen sein, daß der Holhlzylinder der Kehrwalze aus einem einteiligen zylindrischen Rohr besteht und die Kupplungen als Sekundärteil einen zum Rohr koaxial verlaufenden Ring mit einem senkrecht dazu angeordneten Flansch aufweisen und die Kupplungen an beiden Enden des Rohres drehfest und in Axialrichtung des Rohres unverschieblich angeordnet sind.

Vorteilhafterweise weist der Ring der Kupplung axiale Rippen auf und hat das Rohr an beiden Enden innen entsprechende axiale Nuten, wobei die Kupplung in das Ende des Rohres so eingesetzt ist, daß die Außenflächen der Rippen des Ringes auf dem Nutengrund des Rohres liegen und die Innenfläche des Rohres sowie die Außenfläche des Ringes freigestellt sind.

Außerdem kann die Kupplung auf der Antriebsseite des Rohres eine quadratische Lageröffnung aufweisen, in der ein entsprechender quadratischer Antriebszapfen des Antriebes gelagert ist.

Die Kupplung kann auf der Abtriebsseite des Rohres eine Innenverzahnung aufweisen, in der ein Lagerring mit einer passenden Stirnverzahnung eingreift, in dem innenseitig ein Kugellager eingesetzt ist, in dem die nicht rotierende Achse auf der Abtriebsseite drehbeweglich gelagert ist.

Außerdem empfiehlt es sich, daß das Rohr aus Polypropylen und die Kupplungen aus Polyamid besteht.

Die Erfindung wird nachfolgend anhand eines Ausführungsbeispieles des näheren erläutert. Es zeigt
- Fig. 1: einen Schnitt durch eine Kehrwalze in Halbzylinderkonstruktion längs der Linie I - I der Figur 3,

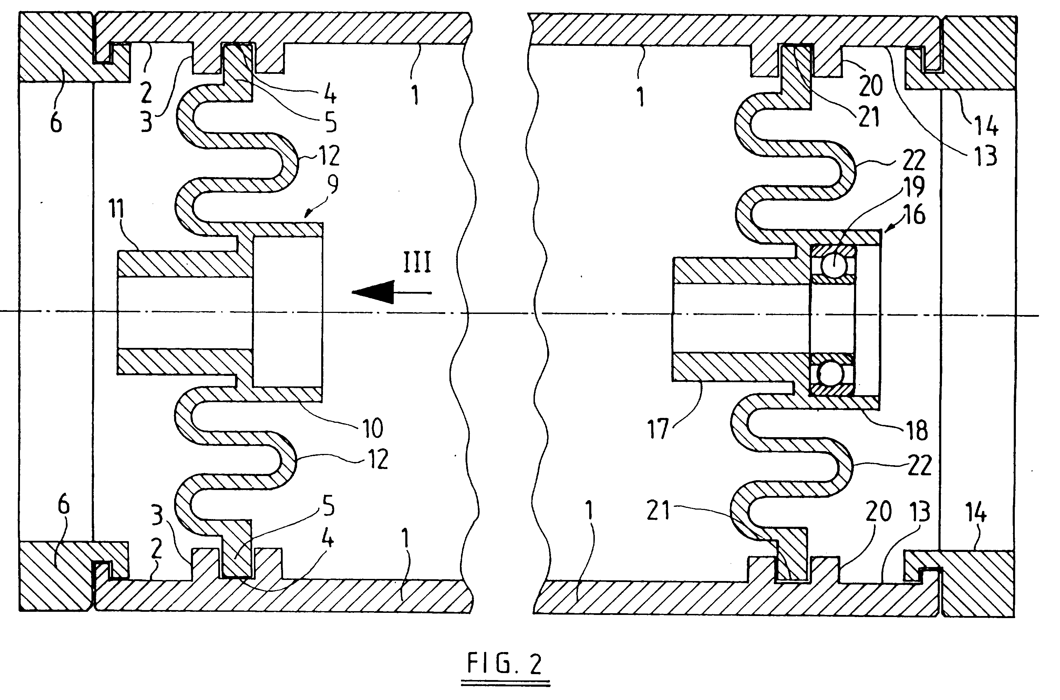

- Fig. 2: eine vergrößerte Darstellung der Figur 1 ohne Antrieb und ohne Achse,
- Fig. 3: eine Ansicht auf Figur 1 in Richtung des Pfeiles III der Figur 1,
- Fig. 4: eine Draufsicht auf eine Halbzylinderschale senkrecht zu der durch die beiden Flanken der Halbzylinderschale aufgespannten Ebene,
- Fig. 5: einen Schnitt längs der Linie V-V der Figur 4,
- Fig. 6: einen Schnitt durch eine Kehrwalze in Vollzylinderkonstruktion ohne Kupplungen in Richtung der Linie VI-VI der Fig. 7,
- Fig. 7: eine Stirnansicht auf das in Figur 6 dargestellte Zylinderrohr in Richtung des Pfeiles VII,
- Fig. 8: einen Mittellängsschnitt durch das Zylinderrohr entsprechend Figur 6 entlang der Linie VIII-VIII der Fig. 10, jedoch mit je einer Kupplung an beiden Enden des Rohres,
- Fig. 9: eine Stirnansicht auf das Rohr gemäß Figur 8 in Richtung des Pfeiles IX,
- Fig. 10: eine Stirnansicht auf das in Figur 8 dargestellte Rohr in Richtung des Pfeiles X,
- Fig. 11: eine vergrößerte Darstellung der Kupplung gemäß Figur 8 als Schnitt längs der Linie XI-XI der Fig. 12,
- Fig. 12: eine Draufsicht auf die Kupplung gemäß Figur 11 in Richtung des Pfeiles XII,
- Fig. 13: eine vergrößerte Darstellung der Kupplung gemäß Fig. 8 als Schnitt längs der Linie XIII-XIII, der Fig. 14,
- Fig. 14: eine Draufsicht auf die Kupplung gemäß Figur 13 in Richtung des Pfeiles XIV,
- Fig. 15: einen Einsatzring, gesehen in Richtung des Pfeiles XV der Fig. 16,
- Fig. 16: einen Schnitt längs der Linie XVI-XVI der Fig. 15,
- Fig. 17: eine Ansicht auf den Antriebszapfen und
- Fig. 18: eine Stirnansicht auf den Antriebszapfen gemäß Figur 17 in Richtung des Pfeiles XVIII.

Ein Zylinderrohr 1 beispielsweise einer Kehrmaschine hat am Antriebsende 2 einen umlaufenden Ring 3 mit einer Nut 4. In die Nut 4 ist ein Ring 5 drehfest eingesetzt.

Am Antriebsende des Zylinderrohres 1 ist ein Abschlußring 6 vorgesehen, der unter anderem auch zur Versteifung des Zylinderrohres 1 dient. Ein Antrieb 7 ist an einem Schwingarm 25 angeordnet. Die Antriebswelle 8 des Antriebes 7 ist in einer Achsaufnahme bzw.

Wellenaufnahme 9 gelagert. Im vorliegenden Fall ist die Achsaufnahme 9 bzw. Hülse abgesetzt und hat einen durchmessergrößeren Teil 10 und einen durchmesserkleineren Teil 11. Am durchmessergrößeren Teil 10 der Hülse 9 sind 6 Mäanderfedern 12 befestigt, die an ihren anderen Enden mit dem Ring 5 verbunden sind.

An dem dem einen Ende 2 gegenüberliegenden anderen Ende 13 des Zylinderrohres 1 ist ebenfalls ein Abschlußring 14 vorgesehen, der auch an dieser Stelle zur Versteifung des Zylinderrohres 1 dient. An einem Schwingarm 26 ist eine Achse 15 angeordnet, die in einer Achsaufnahme 16 gelagert ist, die aus einer abgesetzten Hülse mit einem durchmesserkleineren Teil 17 und einem durchmessergrößeren Teil 18 besteht. In dem durchmessergrößeren Teil 18 ist ein Kugellager 19 angeordnet, in dem die Achse 15 drehbeweglich gelagert ist.

Im übrigen sind die Verhältnisse bezüglich des umlaufenden Ringes 20, der Nut 21 und der Mäanderfedern 22 vergleichbar mit den entsprechenden Bauteilen am gegenüberliegenden Ende 2 des Zylinderrohres 1.

In der ausgezogenen Lage des Zylinderrohres 1 fallen die Achse 23 des Antriebes 7 und die Achse 24 des Zylinderrohres 1 genau zusammen.

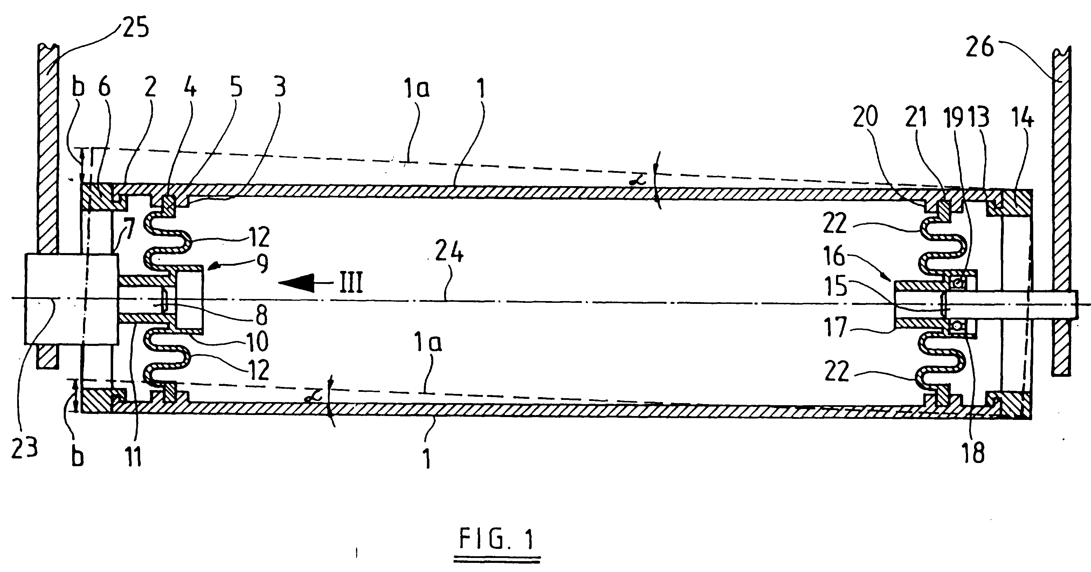

In der von dieser Stellung abgefederten Lage, die in Figur 1 gestrichelt dargestellt ist, befindet sich das Zylinderrohr 1 in der abgewinkelten Stellung 1a, wobei zwischen der abgefederten Stellung 1a und der nicht abgefederten Stellung 1 ein Achsversatzwinkel a von bis zu 5° gebildet sein kann, was bedeutet, daß am Ende 2 des Zylinderrohres 1 letzteres von der nicht abgefederten Stellung um einen Achsversatz b von drei bis fünf cm abweichen kann.

Hierdurch ist sichergestellt, daß bei einer Kehrbürste im Boden befindliche Vertiefungen und Dellen genau so gereinigt werden können, wie glatte ebene Bodenflächen, ohne daß es zu besonderen und verschleißträchtigen Zwängungen in der Kupplung kommt.

Die hier dargestellte federnde Kupplung ist besonders geeignet für Walzen von Kehrmaschinen, jedoch auch für andere Anwendungszwecke, in denen es erwünscht ist, daß die Achse des angetriebenen Teiles von der Achse des antreibenden Teiles um einige Grad, beispielsweise bis zu 5°, abweichen kann oder beide Achsen achsparallel versetzt sein können. Das bedeutet, daß beide Achsen kardanisch miteinander verbunden sind.

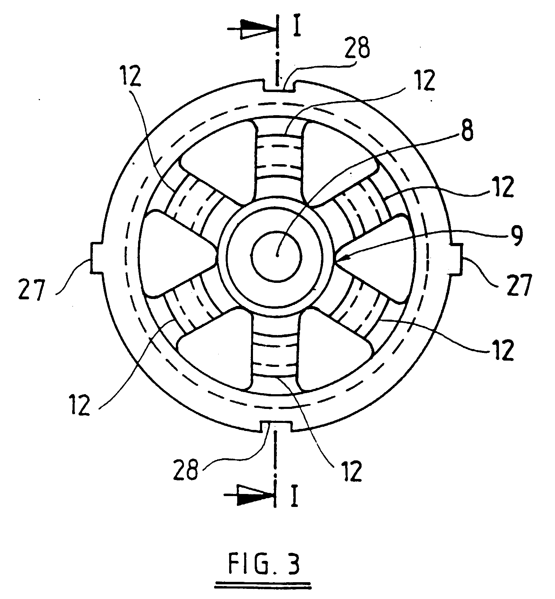

Wie aus Figur 3 ersichtlich ist, sind auf dem Ring 5 zwei gegenüberliegend angeordnete Nuten 28 und zwei ebenfalls gegenüberliegend angeordnete Nocken 27 vorgesehen, wobei die Nuten 28 und die Nocken 27 einen Umfangsabstand von je 90° haben.

Das Zylinderrohr 1 kann in Halbzylinderkonstruktion oder in Vollzylinderkonstruktion ausgebildet sein. Das in Figur 1 dargestellte Zylinderrohr 1 ist in Halbzylinderkonstruktion ausgeführt, so daß der umlaufende Ring 3 der Kupplung in einer umlaufenden Nut 4 innerhalb des Zylinderrohres an dessen Ende eingefaßt ist.

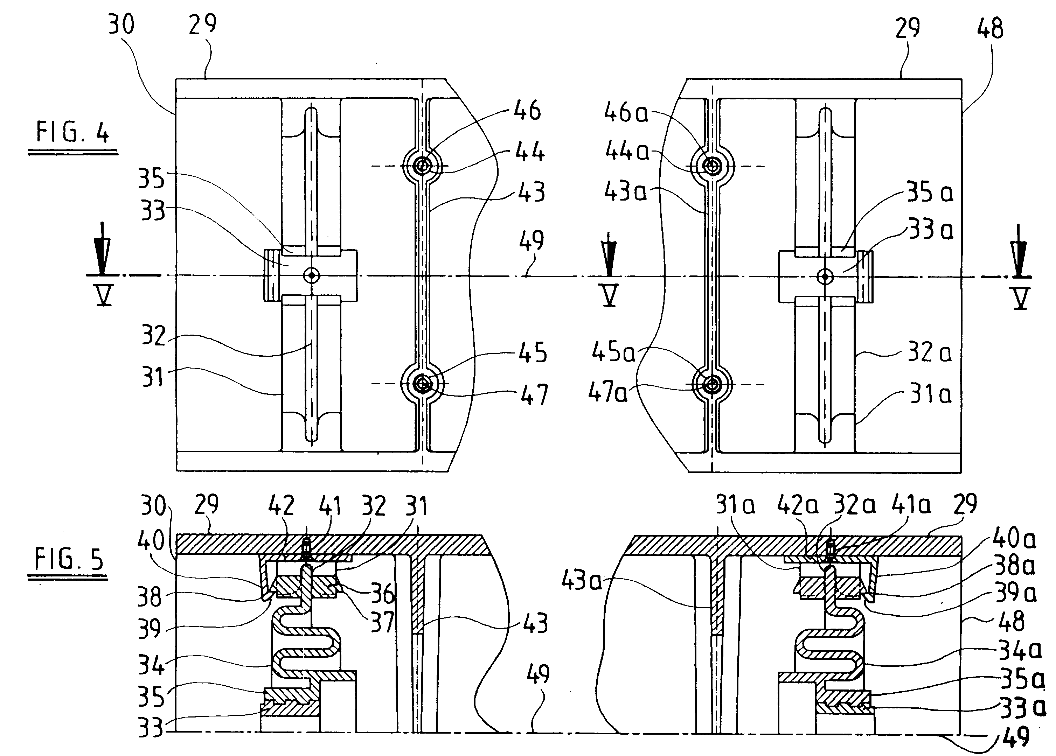

Aus den Figuren 4 und 5 ergibt sich im einzelnen der Aufbau des Zylinders 1 in Halbzylinderkonstruktion.

Der Halbzylinder 29 weist in der Nähe des Antriebsendes 30 einen umlaufenden Ring 31 mit einer mittigen, ebenfalls entsprechend umlaufenden Nut 32 auf. Zentrisch ist ein Lager 33 angeordnet, an dem die Mäanderfeder 34 mit ihrem inneren Ring 35 angeordnet ist. Die Mäanderfeder 34 hat an ihrem äußeren Ende einen umlaufenden Ring 36 mit zwei gegenüberliegenden Nasen 37,38, wobei hinter die Nase 38 ein Rückhaltevorsprung 39 faßt, der an einem federnd ausgebildeten Arm 40 eines mit einer Schraube 41 an dem Halbzylinder 29 befestigten Ringes 42 angeordnet ist.

Mit etwas Abstand von der Mäanderfeder 34 ist eine Verstärkungsrippe 43 vorgesehen, in der Bohrungen 44,45 mit eingesetzten Schraubbolzen 46,47 vorgesehen sind, mit denen zwei Halbzylinder 29 zusammenzuhalten sind. Die gesamte Anordnung ist symetrisch zur Mittelachse 49.

Auf dem dem Antriebsende 30 gegenüberliegenden Abtriebsende 48 sind die Verhältnisse genauso wie vorstehend beschrieben. Aus diesem Grunde sind die vorstehend beschriebenen Bauteile mit dem Index a versehen, nämlich 31a,32a,....46a,47a.

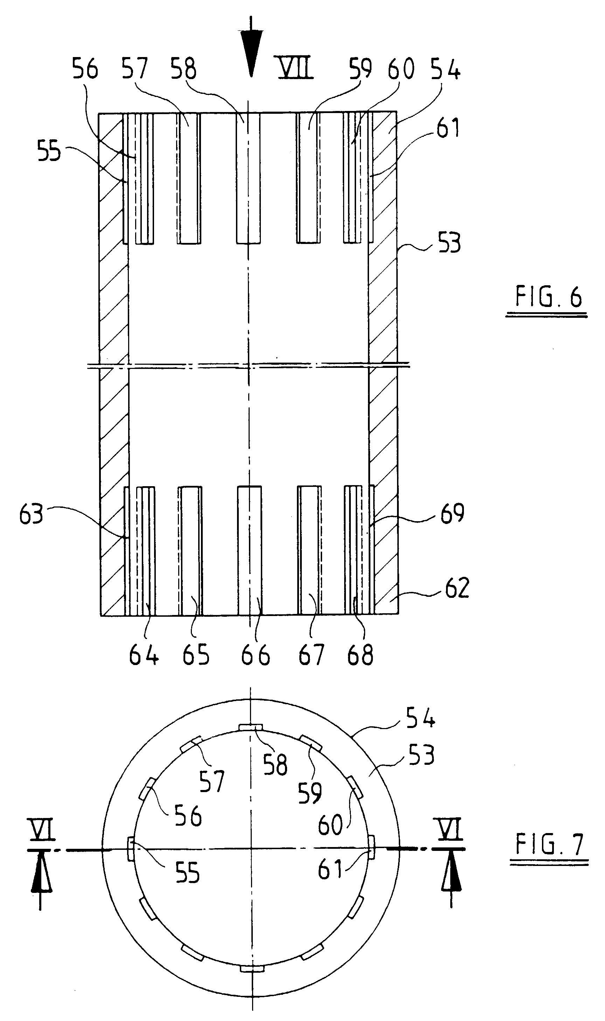

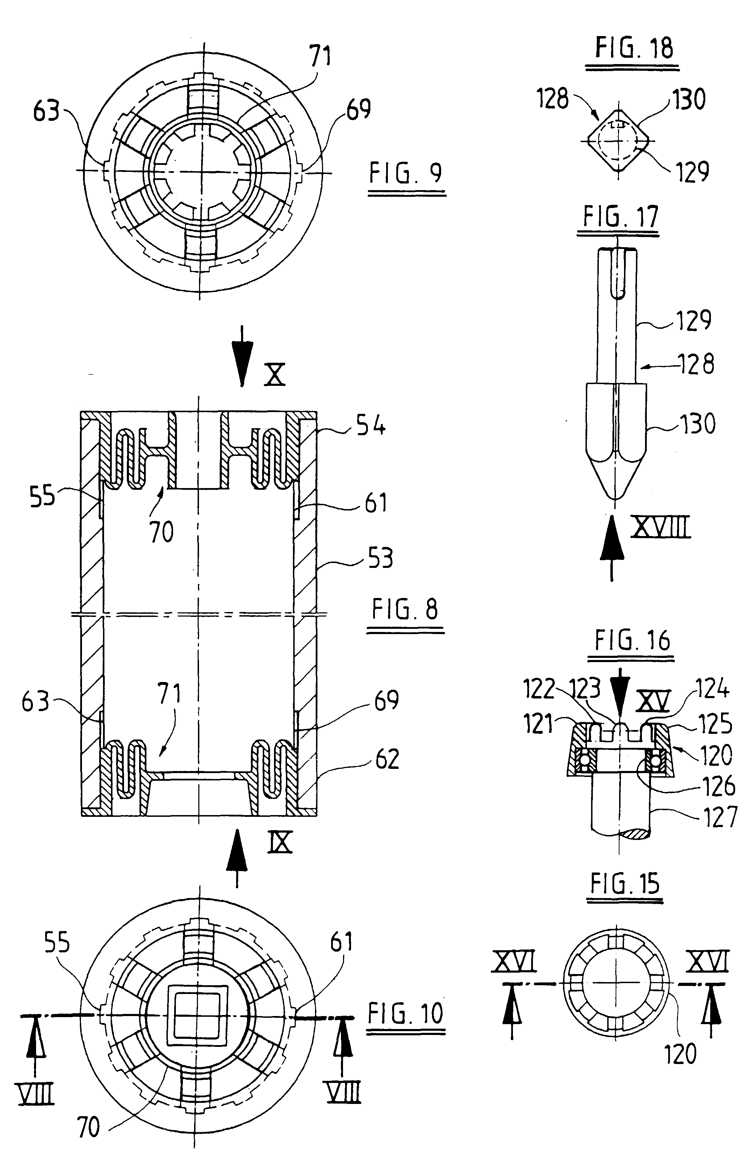

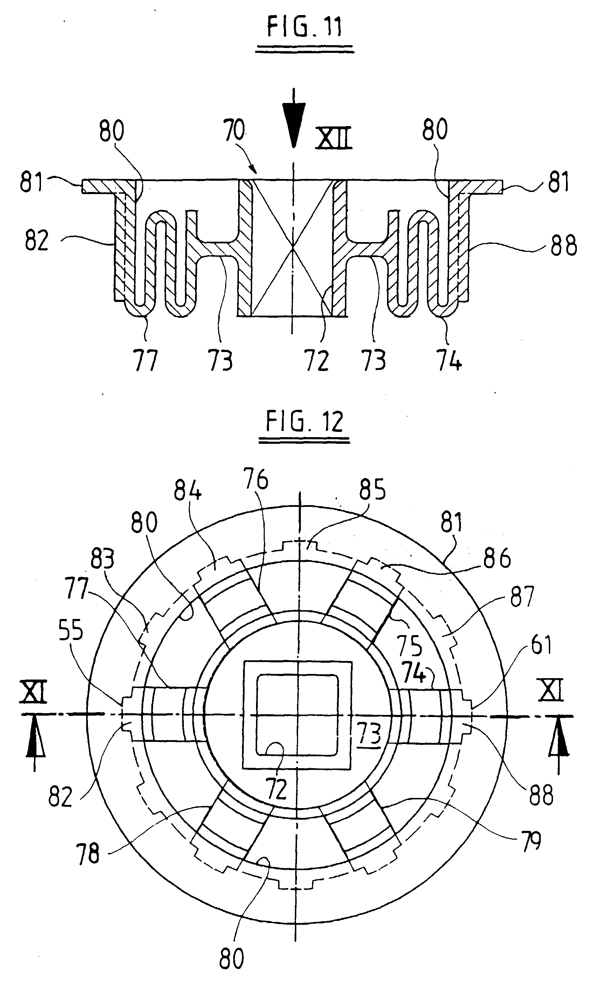

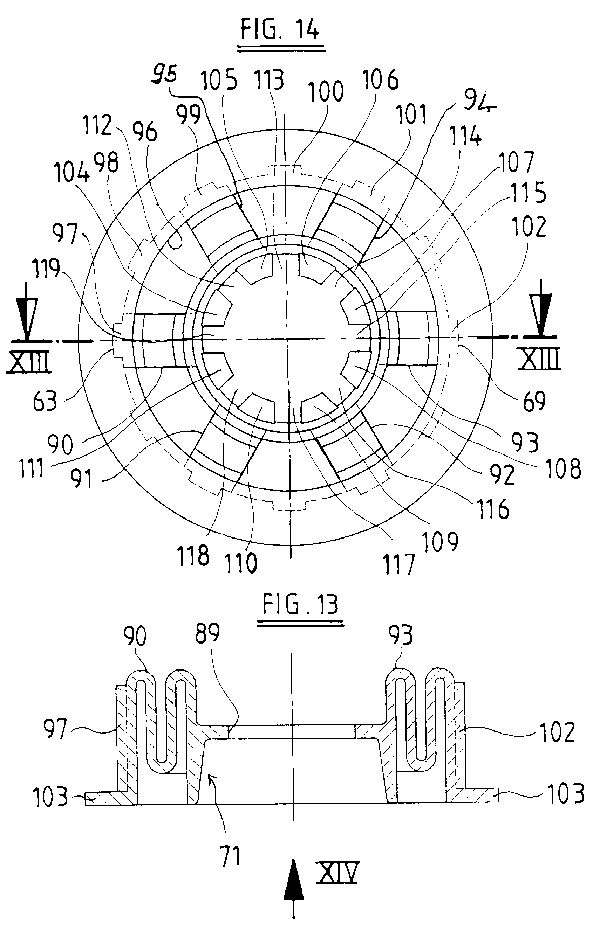

In den Figuren 6 bis 18 ist die Vollzylinderkonstruktion des Zylinders 53 dargestellt. Dieser hat, wie sich insbesondere aus den Figuren 8 und 9 ergibt, am einen Ende 54 Nuten 55,56,57,58,59,60,61 und desgleichen am anderen Ende 62 Nuten 63,64,65,66,67,68,69.

Wie sich insbesondere aus den Figuren 8,9 und 10 ergibt, ist in das Antriebsende 54 des Zylinderrohres 53 die Antriebskupplung 70 und in das Abtriebsende 62 des Zylinderrohres 53 die Abtriebskupplung 71 eingesetzt bzw. mit Rippen, die später noch beschrieben werden, in die Nuten 55 bis 61 und in die Nuten 63 bis 69 eingeklemmt bzw. eingepaßt.

Wie insbesondere aus den Figuren 11 und 12 zu ersehen ist, hat die Antriebskupplung 70 eine zentrale quadratische Antriebsöffnung, in die der in den Figuren 17 und 18 dargestellte Bolzen 128 eingreift. An einem Steg 73 schließen sich mäanderförmig sechs Federn 74,75,76,77,78,79 an. An einem äußeren Ring 80 ist ein umlaufender Flansch 81 vorgesehen, wobei in Längsrichtung des Ringes 80 zwischen dem Flansch 81 und dem unteren Ende der mäanderförmigen Federn 77 auf dem Umfang verteilt Rippen 82,83,84,85,86,87,88 vorgesehen sind. Mit den Rippen 82 bis 88 ist die Antriebskupplung 70 in die Nuten 55 bis 61 des zylindrischen Rohres 53 eingepaßt bzw. eingeklemmt.

Auch die in den Figuren 13 und 14 dargestellte Abtriebskupplung 71 hat eine zentrale Bohrung 89, an die sich mäanderförmig gebogene Federn 90,91,92,93,94,95 anschließen und am äußeren Rand einen Ring 96 haben, der auf dem Umfang verteilt Rippen 97,98,99,100,101,102 aufweist. Am äußeren Ende ist an dem Ring 96 ein umlaufender Flansch 103 angeformt.

In der Bohrung 89 sind Mitnehmer 104,105,106,107,108,109,110,111 vorgesehen. In die Zwischenräume 112,113,114,115,116,117, 118, 119 greift der in den Figuren 15 und 16 dargestellte Ring 120 mit passenden Mitnehmern 121,122,123,124,125 ein. Im Inneren des Ringes 120 ist ein Kugellager 126 vorgesehen, in dem eine Abtriebsachse 127 feststehend gelagert ist.

Der in den Figuren 17 und 18 dargestellte Antriebszapfen 128 hat einen kreisrunden Schaft 129 und eine im Querschnitt quadratische Spitze 130, mit der der Antriebszapfen in die passende quadratische Öffnung 72 der Antriebskupplung 70 eingreift.

### Bezugszeichenliste

- 1: Zylinder
- 1a: Zylinder
- 2: Antriebsende
- 3: umlaufender Ring
- 4: Nut
- 5: Ring
- 6: Ring
- 7: Antriebsmotor
- 8: Welle
- 9: Achsaufnahme, Hülse
- 10: durchmessergroßer Teil
- 11: durchmesserkleiner Teil
- 12: Mäanderfedern, Speichen
- 13: anderes Ende
- 14: Ring
- 15: Achse
- 16: Hülse
- 17: durchmesserkleiner Teil
- 18: durchmessergroßer Teil
- 19: Kugellager
- 20: umlaufender Ring
- 21: umlaufende Nut
- 22: Mäanderfeder
- 23: Achse
- 24: Achse
- 25: Schwingarm
- 26: Schwingarm
- 27: Nocken
- 28: Nuten
- 29: Halbzylinder
- 30: Antriebsseite
- 31: umlaufender Ring
- 32: umlaufende Nut
- 33: Lager
- 34: Mäanderfeder
- 35: innerer Ring
- 36: äußerer Ring
- 37: Nase
- 38: Nase
- 39: Rückhaltevorsprung
- 40: federnder Arm
- 41: Schraube
- 42: Ring
- 43: Rippe
- 44: Bohrung
- 45: Bohrung
- 46: Schraubbolzen
- 47: Schraubbolzen
- 48: Abtriebsende
- 49: Achse
- (50: frei)
- (51: frei)
- (52: frei)
- 53: Zylinder
- 54: Antriebsende
- 55: Nut
- 56: Nut
- 57: Nut
- 58: Nut
- 59: Nut
- 60: Nut
- 61: Nut
- 62: Antriebsende
- 63: Nut
- 64: Nut
- 65: Nut
- 66: Nut
- 67: Nut
- 68: Nut
- 69: Nut
- 70: Antriebskupplung
- 71: Antriebskupplung
- 72: Antriebsöffnung
- 73: Steg
- 74: Feder
- 75: Feder
- 76: Feder
- 77: Feder
- 78: Feder
- 79: Feder
- 80: Ring
- 81: Flansch
- 82: Rippe
- 83: Rippe
- 84: Rippe
- 85: Rippe
- 86: Rippe
- 87: Rippe
- 88: Rippe
- 89: Öffnung
- 90: Feder
- 91: Feder
- 92: Feder
- 93: Feder
- 94: Feder
- 95: Feder
- 96: Ring
- 97: Rippe
- 98: Rippe
- 99: Rippe
- 100: Rippe
- 101: Rippe
- 102: Rippe
- 103: Flansch
- 104: Vorsprung
- 105: Vorsprung / 106 Vorsprung
- 107: Vorsprung
- 108: Vorsprung
- 109: Vorsprung
- 110: Vorsprung
- 111: Vorsprung
- 112: Zwischenraum
- 113: Zwischenraum
- 114: Zwischenraum
- 115: Zwischenraum
- 116: Zwischenraum
- 117: Zwischenraum
- 118: Zwischenraum
- 119: Zwischenraum
- 120: Ringe
- 121: Vorsprung
- 122: Vorsprung
- 123: Vorsprung
- 124: Vorsprung
- 125: Vorsprung
- 126: Kugellager
- 127: Achse
- 128: Bolzen
- 129: Schaft
- 130: Bolzenkopf

## Patentansprüche

1. Kupplung, bestehend aus einem Primärteil (9) und einem Sekundärteil (5) sowie aus einer drehfesten Verbindung (12) zwischen dem Primärteil (9) und dem Sekundärteil (5), wobei als Primärteil (9) eine Achsaufnahme (9) und als Sekundärteil (5) ein zur Achsaufnahme (9) koaxialer und mit dieser drehfest verbundener Ring (5) vorgesehen ist und wobei als Verbindung zwischen der Achsaufnahme (9) und dem Ring (5) speichen-förmig angeordnete Federn (12) vorgesehen sind, die senkrecht zu der von dem Ring (5) aufgespannten Ebene elastisch sind und in Drehrichtung in der von dem Ring (5) gebildeten Ebene drehsteif sind, und wobei das Primärteil (9) gegenüber dem Sekundärteil (5) eine taumelnde Bewegung ausführt, **dadurch gekennzeichnet**, daß die Achsaufnahme (9) als Hülse ausgebildet ist, daß die Federn (12) und die Achsaufnahme (9) sowie der Ring (5) als einteiliges Spritzgießteil aus einem Polyamid oder einem Polyacetalharz ausgeführt sind, daß die Federn (12) als Mäanderfedern (12) ausgebildet sind und daß auf dem Umfang des Ringes (5) verteilt Mitnehmer angeordnet sind, die auf dem Ring (5) als Nocken (27) und Nuten (28) ausgebildet sind.

2. Kupplung nach Anspruch 1, dadurch gekennzeichnet, daß die Achsaufnahme (9) im Durchmesser abgesetzt ist und einen durchmessergrößeren (10) sowie einen durchmesserkleineren (11) Teil aufweist.

3. Kupplung nach Anspruch 1 oder 2, dadurch gekennzeichnet, daß mehrere einander gleiche Federn (12) vorgesehen sind.

4. Kupplung nach einem der vorhergehenden Ansprüche, dadurch gekennzeichnet, daß auf dem Ring (5) zwei gegenüberliegend angeordnete Nuten (28) und zwei ebenfalls gegenüberliegend angeordnete Nocken (27) vorgesehen sind, wobei die Nuten (28) und die Nocken (27) einen Umfangsabstand von je 90° haben.

5. Verwendung einer Kupplung nach einem der Ansprüche 1 bis 4 für eine Kehrwalze, die als beidseitig offener Langkörper ausgebildet ist, **dadurch gekennzeichnet**, daß je eine der vorstehend beschriebenen und beanspruchten Kupplungen an beiden Enden einer Kehrwalze angeordnet ist, die beidseitig in Schwingarmen (25,26) einer Kehrmaschine gelagert ist, und daß die Kehrwalze an der einen Seite über einen Antrieb und eine Kupplung angetrieben und an der anderen Seite über eine Kupplung und eine Welle frei drehbeweglich gelagert ist.

6. Verwendung nach Anspruch 5, dadurch gekennzeichnet, daß die Kehrwalze einen mit Borsten versehenen Hohlzylinder (53) und zwei an beiden Enden der Kehrwalze angeordnete Kupplungen der in den vorstehenden Ansprüchen beanspruchte Art aufweist.

7. Verwendung nach Anspruch 5 oder 6, dadurch gekennzeichnet, daß die Kehrwalze aus zwei gleichen den Hohlzylinder (53) bildenden Halbzylindern (29) besteht, die fest, aber lösbar miteinander verbunden sind, wobei die Ringe (5) der Kupplungen in in den Hohlzylindern (53) umlaufenden Nuten (32) eingesetzt sind.

8. Verwendung nach einem der Ansprüche 5 oder 6, dadurch gekennzeichnet, daß der Holhlzylinder (53) der Kehrwalze aus einem einteiligen zylindrischen Rohr besteht und die Kupplungen als Sekundärteil einen zum Rohr koaxial verlaufenden Ring mit einem senkrecht dazu angeordneten Flansch aufweisen und die Kupplungen an beiden Enden des Rohres drehfest und in Axialrichtung des Rohres unverschieblich angeordnet sind.

9. Verwendung nach einem der Ansprüche 5 bis 8, dadurch gekennzeichnet, daß der Ring der Kupplung axiale Rippen aufweist und das Rohr an beiden Enden innen ensprechende axiale Nuten hat, wobei die Kupplung in das Ende des Rohres so eingesetzt ist, daß die Außenflächen der Rippen des Ringes auf dem Nutengrund des Rohres liegen und die Innenfläche des Rohres sowie die Außenfläche des Ringes freigestellt sind.

10. Verwendung nach einem der Ansprüche 5 bis 9, dadurch gekennzeichnet, daß die Kupplung auf der Antriebsseite des Rohres eine quadratische Lageröffnung aufweist, in der ein entsprechender quadratischer Antriebszapfen des Antriebes gelagert ist.

11. Verwendung nach einem der Ansprüche 5 bis 10, dadurch gekennzeichnet, daß die Kupplung auf der Abtriebsseite des Rohres eine Innenverzahnung aufweist, in der ein Lagerring mit einer passenden Stirnverzahnung eingreift, in dem innenseitig ein Kugellager eingesetzt ist, in dem die nicht rotierende Achse auf der Abtriebsseite drehbeweglich gelagert ist.

12. Verwendung nach einem der Ansprüche 5 bis 11, dadurch gekennzeichnet, daß das Rohr aus Polypropylen und die Kupplungen aus Polyamid besteht.

## Claims

1. A coupling comprising a primary portion (9) and a secondary portion (5) together with a non-rotatable connection (12) between the primary portion (9) and the secondary portion (5), wherein a spindle mounting (9) is provided as the primary portion (9) and a ring (5) which is coaxial with respect to the spindle mounting (9) and which is non-rotatably connected thereto is provided as the secondary portion (5) and wherein provided as the connection between the spindle mounting (9) and the ring (5) are springs (12) which are arranged in a spoke configuration and which are elastic perpendicularly to the plane defined by the ring (5) and are rotationally stiff in the direction of rotation in the plane formed by the ring (5), and wherein the primary portion (9) performs a wobble motion with respect to the secondary portion (5), characterised in that the spindle mounting (9) is in the form of a sleeve, that the springs (12) and the spindle mounting (9) as well as the ring (5) are in the form of a one-piece injection moulding comprising a polyamide or a polyacetal resin, that the springs (12) are in the form of meander springs (12) and that arranged distributed on the periphery of the ring (5) are entrainment means which are in the form of projections (27) and grooves (28) on the ring (5).

2. A coupling according to claim 1 characterised in that the spindle mounting (9) is stepped in diameter and has a larger-diameter portion (10) and a smaller-diameter portion (11).

3. A coupling according to claim 1 or claim 2 characterised in that there are provided a plurality of mutually identical springs (12).

4. A coupling according to one of the preceding claims characterised in that provided on the ring (5) are two mutually oppositely arranged grooves (28) and two also mutually oppositely arranged projections (27), wherein the grooves (28) and the projections (27) are at a respective peripheral spacing of 90°.

5. Use of a coupling according to one of claims 1 to 4 for a rotary sweeper element in the form of an elongate body which is open at both ends, characterised in that a respective one of the couplings as described and claimed hereinbefore is arranged at each of the two ends of a rotary sweeper element which is mounted at both ends in swing arms (25. 26) of a sweeper and that the rotary sweeper element is driven at one end by way of a drive and a coupling and is freely rotatably supported at the other end by way of a coupling and a shaft.

6. Use according to claim 5 characterised in that the rotary sweeper element has a hollow cylinder (53) provided with bristles, and two couplings of the kind claimed in the preceding claims, the couplings being arranged at both ends of the rotary sweeper element.

7. Use according to claim 5 or claim 6 characterised in that the rotary sweeper element comprises two identical semicylinders (29) which form the hollow cylinder (53) and which are fixedly but releasably connected together, wherein the rings (5) of the couplings are fitted in grooves (32) extending around the hollow cylinder (53).

8. Use according to one of claims 5 and 6 characterised in that the hollow cylinder (53) of the rotary sweeper element comprises a one-piece cylindrical tube and the couplings have as the secondary portion a ring which extends coaxially with respect to the tube and which has a flange arranged perpendicularly thereto, and the couplings are arranged non-rotatably and immovably in the axial direction of the tube at both ends of the tube.

9. Use according to one of claims 5 to 8 characterised in that the ring of the coupling has axial ribs and the tube is provided at both ends at the inside thereof with corresponding axial grooves, wherein the coupling is fitted into the end of the tube in such a way that the outside surfaces of the ribs of the ring lie on the bottoms of the grooves of the tube and the inside surface of the tube and the outside surface of the ring are free.

10. Use according to one of claims 5 to 9 characterised in that on the drive side of the tube the coupling has a square mounting opening in which is mounted a corresponding square drive trunnion of the drive.

11. Use according to one of claims 5 to 10 characterised in that on the driven side of the tube the coupling has an internal tooth configuration in which a bearing ring engages with a corresponding face tooth configuration, wherein fitted in the inside of the bearing ring is a ball bearing for rotatably mounting the non-rotating spindle on the driven side.

12. Use according to one of claims 5 to 11 characterised in that the tube comprises polypropylene and the couplings comprise polyamide.

## Revendications

1. Accouplement constitué d'une partie primaire (9) et d'une partie secondaire (5) ainsi que d'une liaison solidaire en rotation (12) entre la partie primaire (9) et la partie secondaire (5), la partie primaire (9) étant formée par un logement d'axe (9) et la partie secondaire (5) par un anneau (5) coaxial au logement d'axe (9) et solidaire en rotation avec celui-ci, et la liaison entre le logement d'axe (9) et l'anneau (5) étant formée par des ressorts (12) disposés sous la forme de rayons qui sont élastiques perpendiculairement au plan défini par l'anneau (5) et rigides en rotation dans le sens de rotation dans le plan formé par l'anneau (5), et la partie primaire (9) effectuant un mouvement de nutation par rapport à la partie secondaire (5), caractérisé en ce que le logement d'axe (9) est conformé en manchon, en ce que les ressorts (12) et le logement d'axe (9) ainsi que l'anneau (5) sont réalisés sous la forme d'une pièce moulée par injection d'un seul tenant dans un polyamide ou une résine de polyacétal, en ce que les ressorts (12) sont conformés en ressorts à méandres (12), et en ce qu'à la périphérie de l'anneau (5) sont disposés des moyens d'entraînement qui, sur l'anneau (5), sont conformés en languettes (27) et en rainures (28).

2. Accouplement selon la revendication 1, caractérisé en ce que le logement d'axe (9) possède un diamètre étagé et présente une partie à plus grand diamètre (10) ainsi qu'une partie à plus petit diamètre (11).

3. Accouplement selon la revendication 1 ou 2, caractérisé en ce qu'il est prévu plusieurs ressorts (12) identiques entre eux.

4. Accouplement selon une des revendications précédentes, caractérisé en ce que sur l'anneau (5) sont prévues deux rainures (28) disposées en vis-à-vis et deux languettes (27) disposées elles aussi en vis-à-vis, les rainures (28) et les languettes (27) possédant entre elles un écartement circonférentiel de 90°.

5. Utilisation d'un accouplement selon l'une des revendications 1 à 4 pour un balai rotatif conformé en corps allongé ouvert des deux côtés, caractérisée en ce qu'un accouplement tel que décrit ci-dessus et revendiqué est disposé à chacune des deux extrémités d'un balai rotatif et est monté de chaque côté dans un bras oscillant (25, 26) d'une balayeuse, et en ce que, sur l'un de ses côtés, le balai rotatif est entraîné par une unité d'entraînement et par un accouplement et, sur l'autre côté, est monté en libre rotation par l'intermédiaire d'un accouplement et d'un arbre.

6. Utilisation selon la revendication 5, caractérisée en ce que le balai rotatif comporte un cylindre creux (53) garni de brosses et, à ses deux extrémités, deux accouplements du type revendiqué dans les revendications précédentes.

7. Utilisation selon la revendication 5 ou 6, caractérisée en ce que le balai rotatif se compose de deux demi-cylindres identiques (29) qui forment le cylindre creux (53) et qui sont solidarisés l'un à l'autre mais de manière détachable, les anneaux (5) des accouplements étant logés dans des rainures (32) périphériques des cylindres creux (53).

8. Utilisation selon l'une des revendications 5 ou 6, caractérisée en ce que le cylindre creux (53) du balai rotatif est constitué d'un tube cylindrique d'un seul tenant, les accouplements comportent, comme partie secondaire, un anneau qui s'étend coaxialement au tube et qui est associé à un collet perpendiculaire à lui, et les accouplements sont disposés aux deux extrémités du tube de manière solidaire en rotation et sans possibilité de translation dans la direction axiale du tube.

9. Utilisation selon l'une des revendications 5 à 8, caractérisée en ce que l'anneau de l'accouplement comporte des nervures axiales et, à ses deux extrémités, le tube possède à l'intérieur des rainures axiales correspondantes, l'accouplement étant inséré dans l'extrémité du tube, de sorte que les surfaces extérieures des nervures de l'anneau reposent sur le fond des rainures du tube et que la surface intérieure du tube ainsi que la surface extérieure de l'anneau sont libres.

10. Utilisation selon l'une des revendications 5 à 9, caractérisée en ce que, sur le côté entraînement du tube, l'accouplement présente un orifice récepteur carré dans lequel est logé un tourillon d'entraînement de forme carrée correspondante de l'unité d'entraînement.

11. Utilisation selon l'une des revendications 5 à 10, caractérisée en ce que, sur le côté sortie du tube, l'accouplement présente une denture intérieure, dans laquelle s'engrène un anneau porteur à denture droite adaptée, à l'intérieur duquel est logé un roulement à billes dans lequel l'axe non rotatif est monté en rotation sur le côté sortie.

12. Utilisation selon l'une des revendications 5 à 11, caractérisée en ce que le tube est réalisé en polypropylène et les accouplements en polyamide.
